# EUROPÄISCHE PATENTSCHRIFT

(11) **EP 2 372 410 B1**
(45) Veröffentlichungstag und Bekanntmachung des Hinweises auf die Patenterteilung: **06.12.2017**
(21) Anmeldenummer: 11000553.5
(22) Anmeldetag: 25.01.2011
(51) Int. Cl.: G02B 5/22, G02F 1/01, G01J 1/04, G01J 1/02, G03B 7/095, G03B 9/02, H04N 5/225, G01J 1/42

(54) **Verfahren und Vorrichtung zum Abbilden einer Umgebung auf eine Detektoreinrichtung**
Device and method for depicting an environment on a detector device
Procédé et dispositif de représentation d'un environnement sur un dispositif de détecteurs

(30) Priorität: 03.02.2010 DE 102010006664
(43) Veröffentlichungstag der Anmeldung: 05.10.2011
(73) Patentinhaber: Diehl Defence GmbH & Co. KG, 88662 ÜBERLINGEN (DE)
(72) Erfinder: Künzner, Nicolai, 88677 Markdorf (DE); Künstle, Thomas, 88662 Überlingen (DE); Tholl, Hans Dieter, 88690 Uhldingen-Mühlhofen (DE); Gross, Michael, 88682 Salem (DE)
(74) Vertreter: Diehl Patentabteilung

(56) Entgegenhaltungen:
- EP-A2- 0 803 760
- DE-A1- 4 305 807
- US-A- 3 020 406
- US-A- 5 351 151
- US-A- 5 448 382
- US-A- 5 708 522
- US-A1- 2004 188 617
- US-A1- 2007 179 239

## Beschreibung

Die Erfindung betrifft ein Verfahren zum Abbilden einer Umgebung auf einen Detektor, bei dem mit einem optischen System ein Abbildungsstrahlengang erzeugt wird und mit einer im Abbildungsstrahlengang angeordneten Blende ein Teilbereich des Bilds der Umgebung auf der Detektoreinrichtung abgeschattet wird.

Kameras zur Überwachung der Umgebung sind üblicherweise mit elektrooptischen Sensoren, z. B. Matrixdetektoren, ausgestattet, auf denen ein Bild der Umgebung abgebildet und nach elektronischer Auswertung gegebenenfalls auf einem Bildschirm angezeigt wird. Liegt im Bild eine punktförmige oder im Vergleich zu den Dimensionen des Gesichtsfelds des elektrooptischen Sensors eine gering ausgedehnte, jedoch starke Strahlungsquelle, wie beispielsweise die Sonne, so führt diese zu einer Blendung im wiedergegebenen Bild, die die Bildqualität in einem Bereich um die abgebildete Strahlungsquelle stört. Im schlimmsten Fall kommt es sogar zu einer Schädigung des Detektors. Überdies wird bei Vorhandensein einer starken Strahlungsquelle im Gesichtsfeld des Sensors der Bereich der erfassbaren Szenendynamik stark eingeschränkt.

Zur Vermeidung derartiger Effekte wird die auf den Detektor einfallende elektromagnetische Strahlung durch Veränderung der Ausrichtung des Detektors, z. B. durch eine Veränderung der Ausrichtung des abbildenden optischen Systems, verhindert. Eine andere Möglichkeit liegt im Schließen eines Verschlusses, wodurch der Durchgang von Strahlung auf den Detektor verhindert und somit der Detektor vollständig geschützt wird.

Die US 2007/0179239 A1 beschäftigt sich mit optischen Bauelementen aus thermochromem Material zur Verwendung in Kameras oder Überwachungseinrichtungen. Beschrieben wird unter anderem eine ringförmige Blendenkonfiguration, bei welcher durch Erwärmung ringförmiger Bereiche der transparente Innendurchmesser der Blendenkonfiguration einstellbar ist. Weiter wird ein Bauelement mit pixelartigem Aufbau offenbart. Die Pixel bestehen aus thermochromem Material unterschiedlicher Übergangstemperaturen, so dass durch das Bauelement eine Maske gebildet ist, die temperaturabhängig unterschiedliche Muster besitzt.

Aus der DE 43 05 807 A1 ist eine Kamera mit einer steuerbaren Matrixblende bekannt. Die Blende besteht aus Pixeln, die in ihrer Transparenz in Abhängigkeit von Helligkeit ansteuerbar sind zur Erhöhung des Kontrasteindrucks eines Bildes.

Die US 3 020 406 A offenbart die Verwendung eines dünnen Germanium-Plättchens als "Sonnenblende". Das Plättchen ist zwischen einem IR-Detektor und einem optischen System angeordnet. Befindet sich im Gesichtsfeld des optischen Systems die Sonne, so wird es zu einer Erwärmung des Plättchens an der Stelle kommen, an der die Sonne abgebildet wird. Während diese Stelle opak wird, verbleibt der restliche Bereich des Plättchens transparent für IR-Strahlung und gelangt auf den Detektor.

Es ist eine Aufgabe der Erfindung, ein Verfahren und eine Vorrichtung zum Abbilden einer Umgebung auf eine Detektoreinrichtung anzugeben, mit denen die Umgebung auch bei Vorhandensein einer starken Strahlungsquelle zuverlässig überwacht werden kann.

Die auf das Verfahren gerichtete Aufgabe wird gelöst durch ein Verfahren zum Abbilden einer Umgebung auf einen Detektor einer Detektoreinrichtung, bei dem mit einem optischen System ein Abbildungsstrahlengang erzeugt wird und mit einer im Abbildungsstrahlengang angeordneten Blende ein Teilbereich eines Bilds der Umgebung, in welchem sich ein Blendobjekt befindet, auf dem Detektor abgeschattet wird, wobei
a) die Blende in eine Mehrzahl von einzeln ansteuerbaren Segmenten eingeteilt ist und dem Teilbereich zugeordnete Segmente ausgewählt und angesteuert und hierdurch erwärmt werden und die Transmission der ausgewählten Segmente im gesamten Frequenzbereich, in dem der Detektor empfindlich ist, durch die Erwärmung herabgesetzt wird und die ausgewählten Segmente der Blende den Teilbereich des Bilds abschatten,
b) die erwärmten Segmente einen erwärmten Bereich bilden und der zu erwärmende Bereich anhand der Lage des Blendobjekts im Bild ausgewählt wird,
c) der zu erwärmende Bereich mit einer Bewegung des Blendobjekts über das Bild mitgeführt wird und
d) die Blende in einem Bereich, der größer ist als der Teilbereich, vorgeheizt wird, bevor die Transparenz der ausgewählten Segmente durch weiteres Erwärmen herabgesetzt wird, zur Erzeugung einer graduellen Transparenzverringerung um den zu erwärmenden Bereich hinaus.

Durch eine Auswahl von einigen der Segmente der Blende bleibt dem übrigen Bereich der Blende zumindest im Wesentlichen seine normale Transmission erhalten. Es kann so der abzuschattende Teilbereich des Bilds ausgewählt werden. Die Abschattung kann im Bild der Umgebung so platziert werden, dass eine starke Strahlungsquelle abgeschattet ist, wohingegen die außerhalb der Abschattung liegenden Bereiche der Abbildung weiterhin ausgewertet und die entsprechenden Umgebungsteile überwacht werden können.

Die Auswahl der zu erwärmenden Segmente, also der Bereich der Blende, der zur Abschattung des Teilbereichs erwärmt werden soll, im Folgenden auch zu erwärmender Bereich genannt, kann durch ein Steuermittel erfolgen, das die entsprechenden Schaltungen zum Erwärmen der ausgewählten Segmente steuert. Das Steuermittel ist durch ein oder mehrere entsprechende Steuerprogramme für diese Zwecke vorbereitet, dessen bzw. deren Ablauf - beispielsweise in Verbindung mit geeigneten Eingangssignalen, wie Sensorsignalen - eine solche Steuerung bewirkt. Durch das oder die entsprechenden Steuerprogramme wird das Steuermittel zur Durchführung der angegebenen Abläufe befähigt, sodass die entsprechende Steuerung bei Programmablauf durchgeführt wird. Das Steuermittel ist zum Steuern eines, mehrerer oder aller Verfahrensschritte, die im Folgenden, auch in der Figurenbeschreibung, beschrieben sind, vorbereitet.

Die Detektoreinrichtung umfasst zweckmäßigerweise zumindest einen Detektor, insbesondere einen Matrixdetektor, der - je nach Anwendung - gleichzeitig oder ausschließlich in den Spektralbereichen Ultraviolett, sichtbarem Licht, Nahinfrarot, Kurzwelleninfrarot, Mittelwelleninfrarot und Langwelleninfrarot arbeiten kann. Das Bild deckt zweckmäßigerweise einen gewissen Winkelbereich der Umgebung aus Sicht des optischen Systems ab, sodass dieser Ausschnitt der Umgebung überwacht werden kann. Oftmals wird mit einem Bild ein Winkelbereich von 10° x 10° abgedeckt. Das optische System kann eine abbildende Optik aus refraktiven, diffraktiven oder reflektiven Elementen oder einer beliebigen Kombination derselben sein.

Das Herabsetzen der Transmission kann dadurch geschehen, dass die Blende im erwärmten Bereich die durch das optische System einfallende Strahlung in zumindest dem Wellenlängenbereich, in dem der Detektor empfindlich ist, mehr oder weniger vollständig absorbiert und/oder reflektiert.

Vorteilhafterweise enthält die Blende thermochromes Material. Solches Material führt bei einer bestimmten Temperatur einen Phasenübergang durch, z. B. einen Phasenübergang Halbleiter - Metall, und ändert dabei seine optischen Eigenschaften grundlegend, so dass ein Aufheizen des Materials die Transparenz bis auf Null herabsetzen kann. Geeignete Materialien sind einige Oxide von Vanadium VₓO_{y}, z. B. VO₂, das bei 68°C einen Halbleiter-Metall-Übergang vollzieht, V₂O₃, dessen Übergangstemperatur bei -123°C liegt, oder nichtstöchiometrische Mischungen. Das entsprechende thermochrome Material ist vorteilhafterweise als Beschichtung auf einem Blendenträgermaterial aufgebracht, zweckmäßigerweise mit einer Dicke von 0,1 µm bis 1 µm. Als Blendenträgermaterial sind im Infraroten transparente Materialien geeignet, wie Silicium, Germanium, ZnSe oder ZnS. Weiter ist es zweckmäßig, wenn die thermochrome Beschichtung auf einem guten Wärmeträger als Zwischenschicht aufgebracht ist, um eingetragene Wärme schnell wieder abführen zu können, so dass die Schicht wieder transparent ist. Besonders geeignet ist eine synthetische Diamantschicht, insbesondere mit einer Dicke zwischen 10 µm und 50 µm.

Die Blende kann beispielsweise entsprechend der Pixel des Detektors eingeteilt sein, so dass jedem Pixel ein Segment zugeordnet ist. Die Segmente der Blende sind einzeln und getrennt voneinander erwärmbar. Hierzu können die Segmente thermisch voneinander isoliert sein, beispielsweise durch einen Steg zwischen jeweils zwei Segmenten. Jedes Segment kann mit einem Heizelement versehen sein, das zum Erwärmen nur dieses Segments dient. Das Heizelement kann eine Beschichtung auf einem Trägermaterial der Blende aufweisen, die mit Hilfe elektrischer Spannung erwärmt wird. Besonders geeignet hierfür sind Metalle oder Legierungen mit Titan und/oder Platin. Die Beschichtung kann rahmenförmig um das zu erwärmende Segment herumgeführt oder zweiseitig einander gegenüber an zwei Rändern des Segments angeordnet sein.

Vorteilhafterweise werden die ausgewählten Segmente durch Zufuhr von elektrischer Energie erwärmt. An Heizelemente der Segmente kann eine elektrische Spannung angelegt werden, deren Widerstand die Wärme erzeugen. Hierfür sind zweckmäßigerweise an jedem Segment elektrische Leiter angeschlossen, die nur diesem Segment elektrische Energie zuführen.

Alternativ oder zusätzlich kann ein oder mehrere Segmente durch Zufuhr von optischer Energie erwärmt werden. Energiezufuhr kann durch jeweils einen an einem Segment angeschlossenen optischen Leiter erfolgen, der nur diesem Segment Energie zuführt. Möglich ist auch eine Bestrahlung aus einem Lichtleiter über einen Luftabstand hinweg, dessen Strahlung auf ein oder mehrere Segmente - hintereinander oder gleichzeitig - gerichtet wird. Die Strahlung für die Zufuhr von optischer Energie kann hinter einer Aperturblende des optischen Systems, zweckmäßigerweise hinter dem gesamten optischen System, seitlich in den Strahlengang eingeführt und auf die Blende gerichtet werden. Sie ist zweckmäßigerweise Strahlung, die mit Hilfe einer Optik auf die Blende gerichtet ist, und deren Frequenz außerhalb des Empfindlichkeitsbereichs der Detektoreinrichtung liegt. Sie wird vorteilhafterweise mit einem Laser erzeugt, wobei alternativ auch eine oder mehrere LED als Strahlungsquelle möglich sind.

Das erfindungsgemäße Verfahren ist vorteilhafterweise so weitergebildet, dass eine Blendung bzw. ein Blendobjekt in einem Bild der Umgebung erkannt wird. Gemäß der Erfindung wird der Teilbereich des Bilds und damit auch der erwärmte bzw. zu erwärmende Bereich anhand der Lage - und insbesondere zusätzlich anhand der Ausdehnung - der Blendung im Bild ausgewählt. Das Erkennen kann hierbei durch Bildverarbeitung geschehen, z. B. durch eine Intensitätsmessung der einfallenden Strahlung, wobei bei Überschreiten der Intensität über einen Grenzwert diese Intensität als Blendung klassifiziert wird. Alternativ oder zusätzlich besteht die Möglichkeit, den zu erwärmenden Bereich in Abhängigkeit von einer Eigenschaft eines Blendobjekts auszuwählen, z. B. seiner Lage, Größe und/oder Form, seiner Dynamik und/oder seiner Strahlstärke.

Gemäß der Erfindung wird der zu erwärmende Bereich mit einer Bewegung eines Blendobjekts über das Bild mitgeführt. Dadurch ändert die Abschattung ihre Lage im Bild entsprechend.

Ist die Lage eines Blendobjekts im Raum im Vorhinein bekannt, so kann auf bildverarbeitende Methoden bei Auswahl des zu erwärmenden Bereichs verzichtet werden. So kann beispielsweise die Auswahl des Teilbereichs aus der bekannten Lage des Blendobjekts im Raum und der Ausrichtung des optischen Systems im Raum ermittelt werden. Die Auswahl der erwärmten Segmente kann gegebenenfalls an eine im Vorhinein bekannte Wanderung des Blendobjekts im Gesichtsfeld angepasst werden, sodass das Blendobjekt stets vollständig abgeschattet ist.

Alternativ oder zusätzlich ist es vorteilhaft, wenn die Lage des zu erwärmenden Bereichs, also die auszuwählenden Segmente, anhand einer Eigenschaft eines Blendobjekts bzw. einer Blendung durch das Blendobjekt geregelt wird. So kann es vorkommen, dass beispielsweise die Sonne zwar durch eine mitbewegte Blende abgeschattet wird, durch starke Eigenbewegung des optischen Systems die Abschattung jedoch unvollständig ist und ein Rand der Sonne hin und wieder aus der Abschattung hervortritt. Wird die so entstehende Blendung als solche und in ihrer Position im Gesichtsfeld erkannt, so kann durch die Regelung die Position des zu erwärmenden Bereichs nachgeführt und das Blendobjekt in sehr kurzer Zeit wieder vollständig oder im Wesentlichen vollständig abgeschattet werden.

Um ein abgeschattetes Blendobjekt genau überwachen zu können, ist es vorteilhaft, wenn es durch die Abschattung hindurch sichtbar bleibt. Hierzu ist die Abschattung nicht vollständig, so dass eine Resttransparenz verbleibt. Um eine Schädigung der Detektoreinrichtung zu vermeiden, wird diese Resttransparenz vorteilhafterweise so gesteuert, dass die Blende in einem zu erwärmenden Bereich so erwärmt wird, dass sie in den Frequenzen, in denen die Detektoreinrichtung empfindlich ist, undurchlässig ist, dann die Erwärmung reduziert wird, bis ein ausgewählter Teiltransmissionsgrad erreicht ist. Die Auswahl des Transmissionsgrads kann durch eine Bildauswertung geschehen, indem die Erwärmung so lange reduziert und damit der Transmissionsgrad erhöht wird, bis das Blendobjekt in einem vorgegebenen Maß sichtbar ist.

Um eine schnelle Transparenzreduzierung der Blende im ausgewählten Bereich zu erhalten, ist es vorteilhaft, wenn die Blende zumindest teilweise bereits vor der Erwärmung auf einer Temperatur gehalten wird, die in der Nähe der Übergangstemperatur liegt, in der die Blende ihre Transparenz ändert, z. B. einen Phasenübergang vollzieht. Geeignet sind Abstände von 1°C bis 20°C zur Übergangstemperatur. Hierzu kann die Blende als Ganzes oder in einem ausgewählten Bereich, der von einer Eigenschaft eines Blendobjekts abhängig gemacht werden kann und der größer ist als der Teilbereich, vorgeheizt werden, und zwar bevor die Transparenz der ausgewählten Segmente durch das weitere Erwärmen herabgesetzt wird. Durch das Vorheizen wird die Transparenz des vorgeheizten Teils der Blende nicht oder nur in geringem Maß, z. B. um weniger als 5% über den Frequenzbereich des Detektors, verringert. Die Aufheizung erfolgt zweckmäßigerweise auf eine vorbestimmte Temperatur der Blende.

Je näher die Aufheiztemperatur an der Übergangstemperatur der Blende liegt, desto mehr führt ein Erwärmen der ausgewählten Segmente dazu, dass die eingetragene Wärme auch Randbereiche außerhalb des zu erwärmenden Bereichs erwärmt und diese somit ihre Transparenz verringern. Auf diese Weise kann eine graduelle Transparenzverringerung um den zu erwärmenden Bereich hinaus erreicht werden. Die Größe des Bereichs außerhalb des ausgewählten Bereichs, der durch die Erwärmung seine Transparenz deutlich, zumindest über 50%, verringert, im Folgenden Randabschattungsbereich genannt, kann durch die Vorheiztemperatur eingestellt werden.

Dies ist vorteilhaft, um Blendobjekte mit verschiedener Bewegungsdynamik ohne weitreichende Bildstörung effektiv ausblenden zu können. Hat ein Blendobjekt eine geringe Bewegungsdynamik, bewegt es sich also langsam über das Gesichtsfeld, reicht ein geringer Randabschattungsbereich oder kein Randabschattungsbereich aus, da der erwärmte Bereich entsprechend der langsamen Bewegung dem Blendobjekt im Gesichtsfeld nachgeführt werden kann. Bei einer hohen Dynamik kann es sein, dass der erwärmte Bereich nicht schnell genug der Bewegung des Blendobjekts folgt, also die zu erwärmenden Segmente nicht schnell genug gewechselt werden können, und das Blendobjekt, bzw. dessen Bild, den Abschattungsbereich verlässt. Bei fehlendem Randabschattungsbereich trifft die volle Intensität des aus der Abschattung heraustretenden Teils des Blendobjekts den Detektor unvermindert.

Bei einem Randabschattungsbereich tritt zwar ein Teil des Blendobjekts aus dem Kernschatten der Blende heraus, verbleibt allerdings im Teilschatten des graduell nach außen transparenter werdenden Randabschattungsbereichs. Je nach Größe des Randabschattungsbereichs wird der heraustretende Teil noch stark gedämpft. Der austretende Teil des Blendobjekts kann erkannt und der zu erwärmende Bereich entsprechend nachgeführt werden, sodass das Blendobjekt wieder im Kernschatten zu liegen kommt und vollkommen abgeschirmt wird. Vorteilhafterweise wird das Vorheizen in Abhängigkeit einer Eigenschaft eines Blendobjekts im Bild eingestellt. Das Steuern des Vorheizens kann ein Steuern einer Eigenschaft, wie der Größe, Form und Lage, des vorzuheizenden Bereichs umfassen. Weiter kann eine Eigenschaft eines Randabschattungsbereichs ausgewählt und durch das Vorheizen gesteuert werden. Es kann eine gewünschte Eigenschaft des Randabschattungsbereichs entsprechend einer Eigenschaft eines Blendobjekts ermittelt werden und eine Vorheizung wird in Abhängigkeit der Eigenschaft gesteuert.

Anstelle oder zusätzlich zu einer Vorausberechnung der Position eines Blendobjekts und der entsprechenden Positionierung der Blende kann mit Hilfe eines zweiten Detektors die Position eines Blendobjekts z.B. mittels bildverarbeitender Methoden erkannt und der zu erwärmende Bereich so positioniert werden, dass Strahlung vom Blendobjekt den ersten Detektor nicht erreicht. Hierzu umfasst die Detektoreinrichtung zweckmäßigerweise einen ersten und einen zweiten Detektor und der Strahlengang zum ersten Detektor wird unterbrochen, insbesondere vollständig unterbrochen, sodass keine Strahlung von außerhalb der Vorrichtung mehr auf diesen ersten Detektor auftrifft, der Teilbereich wird mit Hilfe des zweiten Detektors ausgewählt, beispielsweise indem das Bild vom zweiten Detektor mit Hilfe bildverarbeitender Methoden ausgewertet und das Blendobjekt und dessen Position im Bild erkannt wird, dann die Position des zu erwärmenden Bereichs festgelegt und die Segmente erwärmt und der Strahlengang zum ersten Detektor wieder geöffnet wird. Die Position des Blendobjekts kann mit Hilfe des vom zweiten Detektor gewonnenen Bildes verfolgt und der zu erwärmende Bereich vor dem ersten Detektor entsprechend positioniert werden, sodass das Blendobjekt stets aus dem Bild des ersten Detektors ausgeblendet ist.

Die Erfindung geht außerdem aus von einer Vorrichtung zum Abbilden einer Umgebung auf eine Detektoreinrichtung mit einem optischen System zum Erzeugen eines Abbildungsstrahlengangs und einer im Abbildungsstrahlengang angeordneten Blende zum Abschatten eines Teilbereichs des Bildes der Umgebung auf der Detektoreinrichtung.

Zur Lösung der auf die Vorrichtung gerichteten Aufgabe wird eine Vorrichtung gemäß den Merkmalen des Anspruchs 8 vorgeschlagen.

Ein abzuschattender Teilbereich kann auf diese Weise schnell abgeschattet werden, so dass einer Bildstörung oder Schädigung der Detektoreinrichtung vorgebeugt werden kann. Vorteilhafterweise durchkreuzt die Blende den gesamten Strahlengang, so dass sie bei vollständiger Erwärmung den Detektor vollständig abschattet.

Eine Ausführungsform der Erfindung sieht vor, dass das optische System einen bildseitig telezentrischen Strahlengang erzeugt, in dem die Blende angeordnet ist. Im telezentrischen Strahlengang bleibt die Abschattung der Blende unabhängig von ihrer Position im Gesichtsfeld zumindest im Wesentlichen gleich groß, sodass eine homogen große Abschattung auch an den Rändern des Gesichtsfelds erreicht werden kann, wenn der bestrahlte Bereich dort positioniert wird.

Weiter ist es vorteilhaft, wenn die Detektoreinrichtung zumindest zwei Detektoren umfasst, die in ihrer absoluten und/oder spektralen Empfindlichkeit unterschiedlich zueinander sind. Die beiden Detektoren sind zweckmäßigerweise zumindest im Wesentlichen in den gleichen Ausschnitt der Umgebung gerichtet. Der erste Detektor kann hierbei zur Darstellung des Bilds der Umgebung dienen und der zweite kann zur Ermittlung einer Eigenschaft des Blendobjekts vorbereitet sein.

Die Blende ist zweckmäßigerweise nicht weiter als 1/10 der Brennweite einer den Strahlengang auf die Blende richtenden Linse des optischen Systems von einer Bildebene des optischen Systems entfernt, um eine Vignettierung des Bilds gering zu halten. Vorteilhaft ist es auch, die Blende in Richtung der optischen Achse zu verfahren. Hierdurch kann eine Vignettierung des Bilds durch die Blende gezielt eingesetzt und variiert werden. Dieses Erfindungsdetail kann alternativ oder zusätzlich zum Einstellen des Randabschattungsbereichs mittels Aufheizung verwendet werden.

Weitere Vorteile ergeben sich aus der folgenden Zeichnungsbeschreibung. In der Zeichnung sind Ausführungsbeispiele der Erfindung dargestellt. Die Zeichnung und die Beschreibung enthalten zahlreiche Merkmale in Kombination, die der Fachmann zweckmäßigerweise auch einzeln betrachten und zu sinnvollen weiteren Kombinationen zusammenfassen wird.

Es zeigen:
- Fig. 1: eine schematische Darstellung einer Vorrichtung zum Abbilden einer Umgebung mit einer Detektoreinrichtung, die zwei unterschiedliche Detektoren umfasst,
- Fig. 2: ein optisches System an einem der Detektoren der Detektoreinrichtung aus Fig. 1,
- Fig. 3: eine in einzelne Segmente eingeteilte Blende vor dem Detektor aus Fig. 2,
- Fig. 4: einen erwärmten Bereich der Blende Fig. 3, der von einem Randabschattungsbereich umgeben ist, und
- Fig. 5: einen Regelkreis zum Auswählen von zu erwärmenden Segmenten der Blende aus Fig. 4.

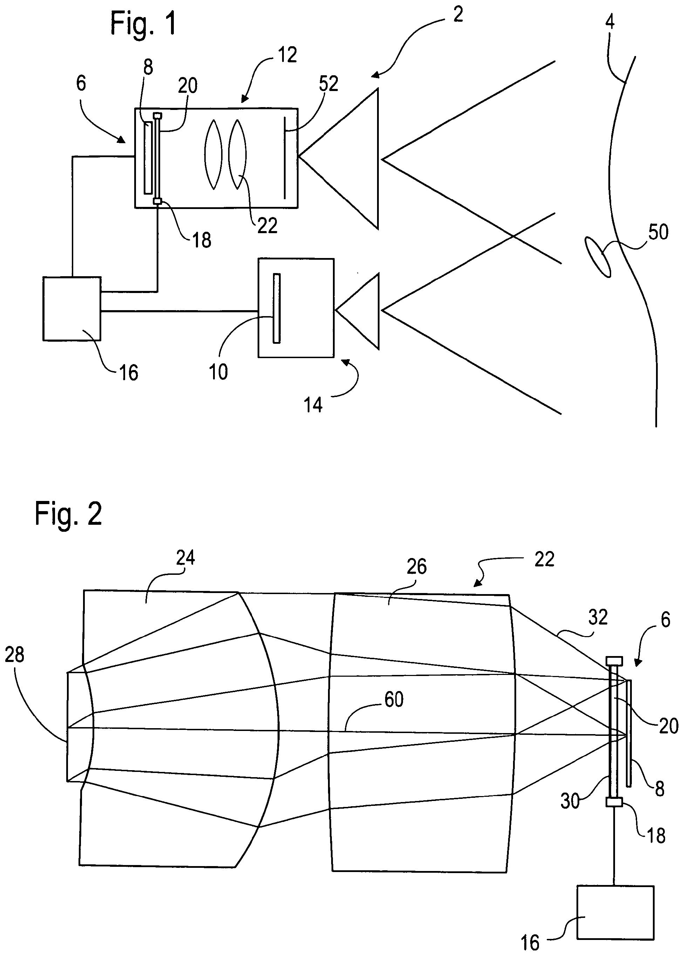

Fig. 1 zeigt eine Vorrichtung 2 zur Abbildung einer Umgebung 4 auf eine Detektoreinrichtung 6, die zwei Detektoren 8, 10, umfasst. Die Detektoren 8, 10 sind Bestandteil von zwei unterschiedlichen Kameras 12, 14, die beide ein Gesichtsfeld von 60° x 60° in die Umgebung 4 aufweisen, wobei beide Kameras 12, 14 den gleichen Ausschnitt der Umgebung 4 aufnehmen. Beide Kameras 12, 14 sind mit einem Steuermittel 16 verbunden, das als elektronische Datenverarbeitungseinheit ausgeführt ist. Das Steuermittel 16 verfügt über ein Computerprogramm, das zum Steuern einer in Fig. 1 nur symbolisch angedeuteten Heizvorrichtung 18 zum Erwärmen einer Blende 20 vor dem Detektor 8 und zum Auswählen eines Teilbereichs des Bilds auf den Detektor 8, der von der Blende 20 abgedeckt werden soll, ausgebildet ist.

Der Detektor 8 ist ein im infraroten Spektralbereich (Langwelleninfrarot zwischen 8 µm und 12 µm) empfindliches Mikrobolometer, das in einem Vakuumgefäß angeordnet ist. Der Detektor 10 ist ebenfalls ein Matrixdetektor, jedoch wesentlich unempfindlicher und über einen weiteren spektralen Bereich empfindlich als der Detektor 8. Während die Kamera 12 zum Abbilden und Überwachen der Umgebung 4 dient, ist die Kamera 14 dazu ausgeführt, Blendobjekte im Gesichtsfeld der Kamera 12 zu erkennen, wobei mit Hilfe des Steuermittels 16 die Position des Blendobjekts im Gesichtsfeld der Kamera 14 und damit im Gesichtsfeld der Kamera 12 bestimmt wird.

Fig. 2 zeigt ein optisches System 22 und den Teil der Detektoreinrichtung 6, der in der Kamera 12 angeordnet ist. Das optische System 22 umfasst ein Objektiv mit einer einstufigen Optik mit einem Gesichtsfeld von 60° x 60° und einer Brennweite von 18 mm. Die Blendenzahl beträgt 1. Es besteht aus zwei Linsen 24, 26 aus Germanium, und die Aperturblende 28 ist unmittelbar vor der ersten Linse 24 angeordnet. Das Objektiv hat einen bildseitig telezentrischen Strahlengang, d. h. die Strahlkegel der Bildpunkte auf dem Detektor 8 sind parallel.

Der Teil der Detektoreinrichtung 6, der sich in der Kamera 12 befindet, umfasst neben dem Detektor 8 ein Vakuumgefäß mit einem Detektorfenster vor dem Detektor 8, durch den der Strahlgang 32 des Objektivs hindurch tritt und auf den Detektor 8 trifft. Der Abstand der Blende 20 zum Detektorfenster beträgt 0,5 mm.

Die Blende 20 ist so im Strahlengang 32 angeordnet, dass sie den gesamten Strahlengang 32 durchkreuzt und somit alle durch die Aperturblende 28 einfallende Strahlung auf den Detektor 8 blockieren kann. Sie umfasst eine gut Wärme leitende Zwischenschicht, die zum optischen System 22 hin mit einer thermochromen Schicht 30 aus Vanadiumdioxid beschichtet ist, die in Fig. 2 als dicke Linie angedeutet ist. Eine gegenüber der thermochromen Schicht 30 angeordnete und als Wärmesenke dienende Trägerschicht dient zum Abführen der Wärme aus der thermochromen Schicht 30, die durch die Zwischenschicht zur Wärmesenke hin abgeführt wird. Alle drei Schichten sind im infraroten Spektralbereich, in dem der Detektor 8 empfindlich ist, transparent, wobei die thermochrome Schicht 30 oberhalb ihrer Übergangstemperatur bei 68 °C für diesen Spektralbereich opak ist.

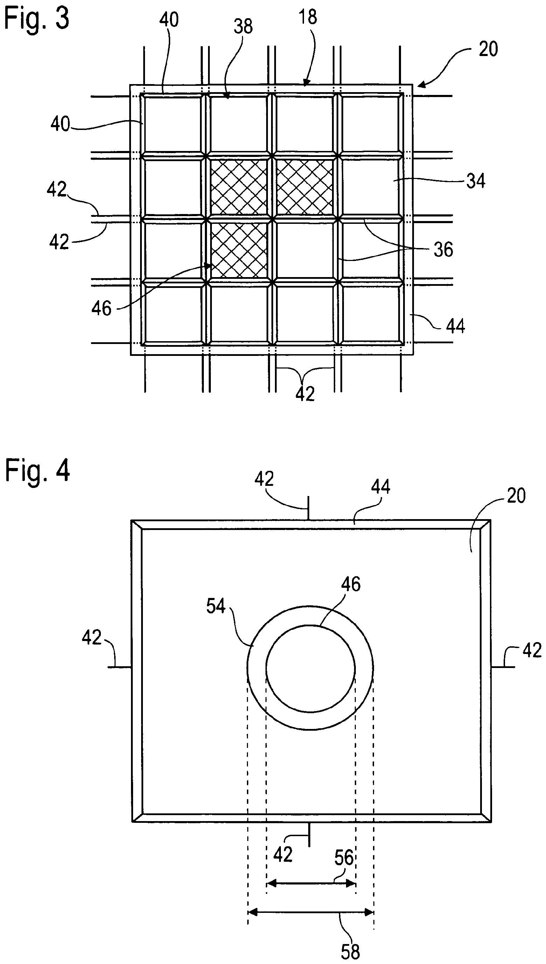

Die Blende 20 und die Heizvorrichtung 18 sind in Fig. 3 detaillierter dargestellt. Die Blende ist in 256 x 256 Segmente 34 unterteilt, von denen in Fig. 3 der Übersichtlichkeit halber nur 4 x 4 Segmente 34 dargestellt sind. Jedes Segment 34 ist von den anderen durch Stege 36 getrennt, die die Segmente 34 voneinander thermisch etwas isolieren. Zum Erwärmen der Segmente 34 ist jedes von ihnen mit einem Heizelement 38 ausgestattet, das vier als metallische Schicht auf das thermochrome Material aufgebrachte Heizeinheiten 40 aufweist, die das Segment 34 zu viert umgeben. Die Heizeinheiten 40 sind jeweils mit zwei elektrischen Anschlüssen 42 versehen, die mit einem nicht dargestellten Spannungserzeuger verbunden sind, der von dem Steuermittel 16 so angesteuert wird, dass alle Heizeinheiten 40 und damit die Heizelemente 38 getrennt voneinander angesteuert werden können. Die Ansteuerung geschieht durch Anlegen einer Spannung an die Heizeinheiten 40, die sich hierdurch erwärmen und die Wärme auf die thermochrome Schicht 30 des Segments 34 übertragen. Bei einem Erwärmen der thermochromen Schicht 30 über die Übergangstemperatur des Phasenübergangs verliert diese ihre Lichtdurchlässigkeit im Bereich zwischen 8 µm und 12 µm erst graduell und bei einer Temperatur oberhalb der Übergangstemperatur vollständig. Die gesamte Blende 20 ist von einem rahmenförmigen Heizmittel 44 umgeben, das - durch das Steuermittel 16 angesteuert - die Blende 20 als Ganzes auf eine von dem Steuermittel 16 vorgegebene Temperatur vorheizt.

Die Vorrichtung 2 dient als Überwachungssystem zur Überwachung der Umgebung 4 und die Blende 20 dient zum Schutz vor zu hoher Bestrahlungsstärke des Detektors 8, z.B. durch Sonneneinstrahlung. In diesem Beispiel kann auf die Kamera 14 verzichtet werden. Das Steuermittel 16 berechnet die Lage der Sonne im Bild der Umgebung 4 auf dem Detektor 8 und bestimmt einen Teilbereich des Bilds, der ein Blendobjekt 50, in diesem Beispiel die Sonne, vollständig umgibt. Anhand des Teilbereichs oder direkt aus dem Stand der Blendobjekts 50 im Bild werden diejenigen Segmente 34 bestimmt, die den Teilbereich vollständig abschatten. Sie bilden den erwärmten bzw. zu erwärmenden Bereich 46. In Fig. 3 sind drei solche Segmente 34 als Beispiel schraffiert dargestellt. Die Begriffe der ausgewählten Segmente 34, des erwärmten bzw. zu erwärmenden Bereichs 46 der Blende und des Teilbereichs des Bilds, das abgeschattet oder abzuschatten ist, werden synonym verwendet. Das Steuermittel 16 steuert die Heizelemente 38 nun so, dass die ausgewählten Segmente 34 über die Übergangstemperatur erwärmt werden und das Blendobjekt 50 aus dem Bild der Umgebung 4 auf den Detektor 8 vollständig ausgeblendet ist.

Außerdem kann durch das Steuermittel 16, das eine Bildverarbeitungseinheit umfasst, aus dem Bild der Umgebung 4 ein potentielles Blendobjekt 50 erfasst werden, das zunächst nicht blendet. Ein Blendobjekt 50 kann ein Flugzeug oder ein anderer Flugkörper oder ein Fahrzeug oder dergleichen sein. Das Erkennen als potentielles Blendobjekt 50 kann durch eine Eigenschaft des Blendobjekts 50 ermittelt werden, beispielsweise eine Form oder eine andere Eigenschaft des Aussehens, eine Abstrahlcharakteristik, beispielsweise derjenigen eines Triebwerks, und/oder einer Bewegungsdynamik. Es ist auch möglich, das potentielle Blendobjekt 50 durch Radar zu erkennen, das datentechnisch mit dem Steuermittel 16 verbunden ist. Aus der erkannten Lage des potentiellen Blendobjekts im Raum oder im Gesichtsfeld kann der abzuschattende Teilbereich und die Segmente 34 der Blende 20 zum Ausblenden des Blendobjekts 50 entsprechend ausgewählt und die Erwärmung der Segmente 34 begonnen werden, so dass der Teilbereich um das Blendobjekt 50 abgeschattet wird, bevor dieses blendet.

Die Erwärmung erfolgt zunächst so, dass die ausgewählten Segmente 34 der Blende 20 vollkommen opak und damit lichtundurchlässig im Empfindlichkeitsbereich des Detektors 8 werden. Der hierfür zu erwärmende Bereich 46 ist in Fig. 3 anhand der drei abschattenden Segmente 34 und in Fig. 4 anhand eines beispielhaften Kreises dargestellt, wobei jegliche andere Formen für den zu erwärmenden Bereich 46 möglich sind. Dann wird der Energieeintrag und damit die Erwärmung so weit reduziert, dass die Temperatur der Blende 20 im Bereich 46 auf die Übergangstemperatur absinkt, so dass das thermochrome Material wieder an Transparenz gewinnt. Das Blendobjekt 50 wird wieder anfänglich im Bild sichtbar und kann anhand von Bildverarbeitung erkannt und verfolgt werden. Die Erwärmung des Bereichs 46 wird nun anhand einer Eigenschaft des Blendobjekts 50 im Bild geregelt. Eine Steuerung oder Regelung anhand einer Eigenschaft des Blendobjekts 50 ist generell vorteilhaft. Zweckmäßigerweise wird die Leistung so eingestellt, dass das Blendobjekt 50 erkennbar bleibt, dessen Strahlung das Bild jedoch nicht stört. Auch andere Eigenschaften, wie eine Strahlungskontinuität des Blendobjekts 50 können für die Steuerung oder Regelung der eingestrahlten Leistung verwendet werden. Allgemein gesprochen erfolgt eine Steuerung oder Regelung der eingestrahlten Leistung aus Ergebnissen einer Bildauswertung des Bilds der Detektoreinrichtung 6.

Weiter ist ein Bildverarbeitungsprogramm innerhalb des Steuermittels 16 vorhanden, das eine Bestrahlungsstärke eines jeden Pixels des Matrixdetektors 8 und/oder des Matrixdetektors 10 der Kamera 14 auswertet. Übersteigt die Intensität in zumindest einem Pixel einen Grenzwert, so wird ein Ausblendverfahren mit Hilfe eines Programms oder eines Programmteils, das durch das Steuermittel 16 ausgeführt wird, gestartet. Liegt die Strahlungsintensität im geblendeten Pixel beispielsweise über dem ersten Grenzwert, jedoch unter einem zweiten Grenzwert, sodass die Strahlung zwar als Bildstörung jedoch nicht als Gefahr einer Schädigung des Detektors 8 klassifiziert wird, kann die Position des geblendeten Pixels mit Hilfe des Detektors 8 bestimmt und die Abschattung veranlasst werden. Tritt das Blendobjekt 50 aus dem abgeschatteten Bereich im Bild heraus, so werden Pixel am Rand der Abschattung geblendet, sodass deren Intensität über den Grenzwert steigt. Dies wird vom Steuermittel 16 registriert und die Position der Abschattung wird entsprechend der gemessenen Strahlungsintensitäten so geregelt, dass die Abschattung über die geblendeten Pixel bewegt wird. Die Regelgröße ist eine auf dem Detektor 8 oder Detektor 10 gemessene Strahlungsintensität.

Übersteigt eine gemessene Intensität einen zweiten Grenzwert, so wird ein Verschluss 52 in der ersten Kamera 12 verschlossen, sodass der Strahlengang 32 komplett unterbrochen ist oder keine Strahlung mehr auf die Aperturblende 28 auftrifft. Eine Überwachung der Umgebung mit Hilfe der Kamera 12 ist somit nicht mehr möglich. Anstelle dessen kann eine gröbere Überwachung der Umgebung 4 mit Hilfe der Kamera 14 treten, deren Aufgabe nun ist, die Lage des Blendobjekts im Gesichtsfeld bzw. im Bild festzustellen. Dies wird durch eine Intensitätsmessung der Strahlung auf die Pixel des Detektors 10 bzw. deren Signalstärke mit Hilfe des Steuermittels 16 durchgeführt. Sobald die Lage des Blendobjekts 50 im Gesichtsfeld bzw. im Bild ermittelt ist, werden der betroffene Bildbereich und eine vorgegebene Umgebung, zusammen der Teilbereich, von ihm abgeschattet. Dann wird der Verschluss 52 wieder geöffnet und die Umgebungsüberwachung fortgeführt, wobei das Blendobjekt 50 durch die Abschattung im Bild vollständig ausgeblendet ist. Die Position der Abschattung im Bild wird fortwährend nachgeregelt mit Hilfe der am Detektor 10 gemessenen Strahlungsintensitäten, aus denen die Position des Blendobjekts 50 im Bild fortwährend überwacht wird. Selbstverständlich ist es auch möglich, die Position eines Blendobjekts 50, wenn dessen Strahlungsintensität nur zwischen den beiden Grenzwerten liegt, mit Hilfe des Detektors 8 zu verfolgen. Ebenfalls möglich ist, auf die Kamera 14 zu verzichten und die Intensitätsauswertung bzw. Positionsmessung des Blendobjekts nur mit Hilfe des Detektors 8 auszuführen.

Die Größe und Form des erwärmten Bereichs 46 und damit der Abschattung auf dem Detektor 8 kann beliebig gewählt werden und im Extremfall auch das gesamte Bild ergreifen. Je größer die Abschattung ist, desto mehr Leistung wird in die Blende 20 gebracht. Diese Leistung kann durch die Heizelemente 38 alleine erbracht werden. Bei kalten Umgebungstemperaturen und/oder großen Bereichen 46 ist es sinnvoll, einen Teil der Leistung durch das Heizmittel 44 einzutragen, durch die die Blende 20 vorgeheizt wird. Die Temperatur der Blende 20 wird durch einen Sensor erfasst, der mit dem Steuermittel 16 verbunden ist und der die gesamte Fläche der Blende 20 abtastet. Die Vorheizleistung kann abhängig gemacht werden von der Umgebungstemperatur, der Temperatur der Blende 20 und/oder der Größe des zu erwärmenden Bereichs 46.

Eine Größe des zu erwärmenden Bereichs 46 und damit einer Abschattung im Bild kann an eine Eigenschaft, z.B. eine Größe, eines erkannten Blendobjekts 50 angepasst werden. Hierbei kann darauf geachtet werden, dass die Größe des zu erwärmenden Bereichs 46 so gewählt ist, dass stets ein festgelegter Abstand zwischen dem Rand des Blendobjekts 50 und dem Rand der Abschattung verbleibt. Dieser Abstand kann von mehreren Faktoren beeinflusst werden. Ein Faktor kann eine Strahlungsintensität des Blendobjekts 50 pro Fläche auf dem Detektor 8 sein. Auch eine Bewegungsdynamik des Blendobjekts 50 im Bild kann als Steuergröße oder Regelgröße zur Einstellung der Größe der Abschattung und damit des Teilbereichs verwendet werden. Hat das Blendobjekt 50 eine geringe Bewegungsdynamik, bewegt es sich also mit langsamer Geschwindigkeit im Bild, ist es ausreichend, die Abschattung klein zu lassen, da die Gefahr eines unvermittelten Austritts des Blendobjekts 50 aus der Abschattung im Bild gering ist. Bei einer hohen Bewegungsdynamik ist es sinnvoll, die Abschattung groß einzustellen, sodass das Blendobjekt 50 auch bei schnellen und unerwarteten Bewegungen abgeschattet bleibt. Allgemein gesprochen wird die Größe des Bereichs 46 und damit der Abschattung in Abhängigkeit von einer Eigenschaft, insbesondere der Bewegungsdynamik des Blendobjekts 50 im Bild eingestellt.

Fig. 4 zeigt einen Randabschattungsbereich 54, der um den erwärmten Bereich 46 nutzbar gemacht wird. Die Größe des Randabschattungsbereichs 54 kann mit der Vorheiztemperatur der Blende 20 und alternativ oder zusätzlich mit der Heizleistung der Heizelemente 38 pro Fläche eingestellt werden. Je höher die Vorheiztemperatur der Blende 20 und/oder die Heizleistung der Heizelemente 38 ist, desto größer ist der Randabschattungsbereich 54 bezogen auf die Breite des Randabschattungsbereichs 54, die sich in Fig. 4 aus dem bestrahlten Bereich 46, der einen Kernschatten mit einem ersten Durchmesser 56 bildet, und dem Randabschattungsbereich 54, der einen Teilschatten mit einem größeren Durchmesser 58 bildet, ergibt. Die Hälfte der Differenz der beiden Durchmesser 56 und 58 und damit die Breite bzw. Größe des Randabschattungsbereichs 54 kann so eingestellt werden.

Ein ähnlicher Effekt kann durch eine Vignettierung des Bilds durch die Abschattung erreicht werden, wenn diese nicht in einer Bildebene des optischen Systems 22 liegt. Je weiter die Blende 20 von der Bildebene entfernt ist, desto größer ist die Vignettierung. Die Vignettierung kann eingestellt werden, indem die Blende 20 in Richtung der optischen Achse 60 im Strahlengang 32 verfahren wird. Je weiter die Blende 20 von der Bildebene entfernt wird, desto größer ist die Vignettierung und das Verhältnis vom großen Durchmesser 58 zu kleinem Durchmesser 56 auch ohne einen Randabschattungsbereich 54. Die Bewegung der Blende 20 parallel zur optischen Achse 60 wird ebenfalls durch das Steuermittel 16 gesteuert, wobei auch eine Regelung denkbar ist.

Eine Einstellung der Vignettierung und/oder des Randabschattungsbereichs 54 erfolgt durch das Steuermittel 16 in Abhängigkeit von einer Eigenschaft des Blendobjekts 50.

Die Eigenschaft kann eine Bewegungsdynamik des Blendobjekts 50, eine Geschwindigkeit des Blendobjekts 50 im Bild, eine Größe und/ oder eine Strahlungsintensität des Blendobjekts 50 sein.

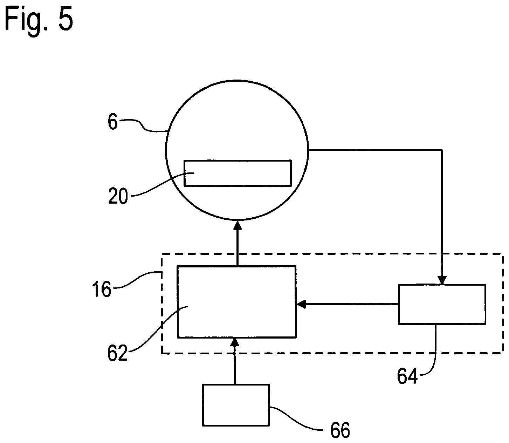

Ein Steuer- oder Regelkreis zum Auswählen der abschattenden Segmente 34 und Einstellen des erwärmten Bereichs 46 ist in Fig. 5 dargestellt. Die Detektoreinrichtung 6 ist Teil eines Suchkopfs eines Flugkörpers und enthält die Blende 20. Diese wird durch eine Steuerelektronik 62 mit Steuerdaten angesteuert zum Abschatten des Detektors 8. Die Detektoreinrichtung 6 liefert Sensordaten an eine Signalverarbeitung 64, die mit einer Bildverarbeitung das Blendobjekt 50 und dessen Position im Bild erkennt. Mit Hilfe einer Inertialmesseinheit 66 werden die eigenen Positionsdaten der Vorrichtung ermittelt, die die Ausrichtung der Kameras 12, 14 in die Umgebung 4 beinhalten. Aus den eigenen Positionsdaten und der Position des Blendobjekts im Bild werden durch das Steuermittel die Positionsdaten des Blendobjekts 50 ermittelt. Diese oder direkt die Daten zur Position des Blendobjekts 50 im Bild werden für die Erstellung der Steuerdaten an die Blende 20 bzw. die Heizvorrichtung 18 verwendet. Anhand der Sensordaten werden die Steuerdaten fortwährend korrigiert, so dass das Blendobjekt 50 stets vollständig oder teilweise abgeschattet ist. Die Blendung im Bild oder die Lage des Blendobjekts 50 im Bild innerhalb der Abschattung kann hierbei als Regelgröße verwendet werden.

### Bezugszeichenliste

- 2: Vorrichtung
- 4: Umgebung
- 6: Detektoreinrichtung
- 8: Detektor
- 10: Detektor
- 12: Kamera
- 14: Kamera
- 16: Steuermittel
- 18: Heizvorrichtung
- 20: Blende
- 22: optisches System
- 24: Linse
- 26: Linse
- 28: Aperturblende
- 30: Schicht
- 32: Strahlengang
- 34: Segment
- 36: Steg
- 38: Heizelement
- 40: Heizeinheit
- 42: Anschluss
- 44: Heizmittel
- 46: Bereich
- 50: Blendobjekt
- 52: Verschluss
- 54: Randabschattungsbereich
- 56: Durchmesser
- 58: Durchmesser
- 60: optische Achse
- 62: Steuerelektronik
- 64: Signalverarbeitung
- 66: Inertialmesseinheit

## Patentansprüche

1. Verfahren zum Abbilden einer Umgebung (4) auf einen Detektor (8) einer Detektoreinrichtung (6), bei dem mit einem optischen System (22) ein Abbildungsstrahlengang (32) erzeugt wird und mit einer im Abbildungsstrahlengang (32) angeordneten Blende (20) ein Teilbereich eines Bilds der Umgebung (4), in welchem sich ein Blendobjekt (50) befindet, auf dem Detektor (8) abgeschattet wird, wobei
a) die Blende (20) in eine Mehrzahl von einzeln ansteuerbaren Segmenten (34) eingeteilt ist und dem Teilbereich zugeordnete Segmente (34) ausgewählt und angesteuert und hierdurch erwärmt werden und die Transmission der ausgewählten Segmente (34) im gesamten Frequenzbereich, in dem der Detektor (8) empfindlich ist, durch die Erwärmung herabgesetzt wird und die ausgewählten Segmente (34) der Blende (20) den Teilbereich des Bilds abschatten,
b) die erwärmten Segmente (34) einen erwärmten Bereich (46) bilden und der zu erwärmende Bereich (46) anhand der Lage des Blendobjekts (50) im Bild ausgewählt wird,
c) der zu erwärmende Bereich (46) mit einer Bewegung des Blendobjekts (50) über das Bild mitgeführt wird und
d) die Blende (20) in einem Bereich, der größer ist als der Teilbereich, vorgeheizt wird, bevor die Transparenz der ausgewählten Segmente (34) durch weiteres Erwärmen herabgesetzt wird, zur Erzeugung einer graduellen Transparenzverringerung um den zu erwärmenden Bereich (46) hinaus.

2. Verfahren nach Anspruch 1,
wobei die ausgewählten Segmente (34) durch Zufuhr von elektrischer Energie erwärmt werden.

3. Verfahren nach Anspruch 1 oder 2,
wobei die ausgewählten Segmente (34) durch Zufuhr von optischer Strahlung erwärmt werden.

4. Verfahren nach einem der vorhergehenden Ansprüche,
wobei der erwärmte Bereich (46) anhand von Erkenntnissen über ein Blendobjekt (50) in seiner Eigenschaft verändert wird.

5. Verfahren nach einem der vorhergehenden Ansprüche,
wobei das Vorheizen in Abhängigkeit von einer Eigenschaft eines Blendobjekts (50) gesteuert wird.

6. Verfahren nach einem der vorhergehenden Ansprüche,
wobei eine Eigenschaft eines Randabschattungsbereichs (54) ausgewählt und durch das Vorheizen gesteuert wird.

7. Verfahren nach einem der vorhergehenden Ansprüche,
wobei die Detektoreinrichtung (6) einen ersten und einen zweiten Detektor (8, 10) umfasst, der Strahlengang (32) zum ersten Detektor (8) vollständig unterbrochen wird, dem abzuschattenden Teilbereich zugeordnete Segmente mit Hilfe des zweiten Detektors (10) ausgewählt werden, die ausgewählten Segmente (34) erwärmt werden und der Strahlengang (32) zum ersten Detektor (8) wieder geöffnet wird.

8. Vorrichtung zum Abbilden einer Umgebung (4) auf einen Detektor (8) einer Detektoreinrichtung (6) mit einem optischen System (22) zum Erzeugen eines Abbildungsstrahlengangs (32) und einer im Abbildungsstrahlengang (32) angeordneten Blende (20) zum Abschatten eines Teilbereichs eines Bilds der Umgebung (4), in welchem sich ein Blendobjekt (50) befindet, auf dem Detektor (8), wobei
a) die Blende (20) in eine Mehrzahl von einzeln ansteuerbaren Segmenten (34) eingeteilt ist und jedes Segment (34) ein Heizelement umfasst, und
b) ein Steuermittel (16) vorhanden ist, das dazu vorbereitet ist,
- dem Teilbereich zugeordnete Segmente (34) auszuwählen und Heizelemente (38) so anzusteuern, dass die ausgewählten Segmente (34) erwärmt werden, wobei die Transmission der ausgewählten Segmente (34) der Blende (20) im gesamten Frequenzbereich, in dem der Detektor (8) empfindlich ist, durch die Erwärmung herabgesetzt wird und die ausgewählten Segmente (34) den Teilbereich des Bilds abschatten,
- den durch die ausgewählten Segmente (34) gebildeten erwärmten Bereich (46) anhand der Lage des Blendobjekts (50) im Bild auszuwählen,
- durch entsprechende Ansteuerung der Heizelemente (38) den zu erwärmenden Bereich (46) mit einer Bewegung des Blendobjekts (50) über das Bild mitzuführen und
- durch entsprechende Ansteuerung der Heizelemente (38) die Blende (20) in einem Bereich, der größer ist als der Teilbereich, vorzuheizen, bevor die Transparenz der ausgewählten Segmente (34) durch weiteres Erwärmen herabgesetzt wird.

9. Vorrichtung nach Anspruch 8,
wobei die Blende (20) parallel zur optischen Achse (60) des optischen Systems (22) verfahrbar ist.

## Claims

1. Method for imaging a surrounding area (4) on a detector (8) of a detector device (6) in which an optical system (22) produces an imaging beam path (32), and a panel (20), which is arranged in the imaging beam path (32), shadows a subarea of an image of the surrounding area (4), in which subarea a dazzling object (50) is located, on the detector (8), wherein
a) the panel (20) is subdivided into a plurality of segments (34) which can be operated individually, and segments (34) which are associated with the subarea are selected and operated, and are in this way heated, and the transmission of the selected segments (34) is reduced by the heating throughout the frequency range in which the detector (8) is sensitive, and the selected segments (34) of the panel (20) shadow the subarea of the image,
b) the heated segments (34) form a heated area (46), and the area (46) to be heated is selected on the basis of the position of the dazzling object (50) in the image,
c) the area (46) to be heated is conveyed together with a movement of the dazzling object (50) over the image, and
d) the panel (20) is preheated in an area which is larger than the subarea, before the transparency of the selected segments (34) is reduced by further heating, in order to produce a gradual transparency reduction around the region (46) to be heated.

2. Method according to Claim 1, wherein the selected segments (34) are heated by supplying electrical power.

3. Method according to Claim 1 or 2, wherein the selected segments (34) are heated by supplying optical radiation.

4. Method according to one of the preceding claims, wherein the characteristic of the heated area (46) is changed on the basis of the knowledge about a dazzling object (50).

5. Method according to one of the preceding claims, wherein the preheating is controlled as a function of a characteristic of a dazzling object (50).

6. Method according to one of the preceding claims, wherein a characteristic of an edge shadow area (54) is selected and is controlled by the preheating.

7. Method according to one of the preceding claims, wherein the detector device (6) has a first and a second detector (8, 10), the beam path (32) for the first detector (8) is completely interrupted, segments associated with the subarea to be shadowed are selected with the aid of the second detector (10), the selected segments (34) are heated, and the beam path (32) to the first detector (8) is opened again.

8. Apparatus for imaging a surrounding area (4) on a detector (8) of a detector device (6) having an optical system (22) for production of an imaging beam path (32), and having a panel (20), which is arranged in the imaging beam path (32), for shadowing a subarea of an image of the surrounding area (4), in which subarea a dazzling object (50) is located, on the detector (8), wherein
a) the panel (20) is subdivided into a plurality of segments (34) which can be operated individually and each segment (34) has a heating element, and
b) a control means (16) is provided and is prepared
- to select segments (34) associated with the subarea and to operate heating elements (38) such that the selected segments (34) are heated, wherein the transmission of the selected segments (34) of the panel (20) is reduced by the heating throughout the frequency range in which the detector (8) is sensitive, and the selected segments (34) shadow the subarea of the image,
- to select the heated area (46) formed by the selected segments (34) on the basis of the position of the dazzling object (50) in the image,
- by corresponding operation of the heating elements (38), to convey the area (46) to be heated together with a movement of the dazzling object (50) over the image, and
- by corresponding operation of the heating elements (38), to preheat the panel (20) in an area which is larger than the subarea, before the transparency of the selected segments (34) is reduced by further heating.

9. Apparatus according to Claim 8, wherein the panel (20) can be moved parallel to the optical axis (60) of the optical system (22).

## Revendications

1. Procédé de formation d'image d'un environnement (4) sur un détecteur (8) d'un dispositif détecteur (6), dans lequel un chemin de faisceau de formation d'image (32) est généré au moyen d'un système optique (22) et une zone partielle d'une image de l'environnement (4) dans laquelle se trouve un objet de diaphragme (50) est occultée sur le détecteur (8) par un diaphragme (20) disposé sur le chemin de faisceau de formation d'image (32), dans lequel
a) le diaphragme (20) est subdivisé en une pluralité de segments (34) pouvant être commandés individuellement et des segments (34) associés à la zone partielle sont sélectionnés et commandés et sont de ce fait chauffés, et la transmission des segments sélectionnés (34) dans l'ensemble de la plage de fréquences dans laquelle le détecteur (8) est sensible, est réduite du fait du chauffage et les segments sélectionnés (34) du diaphragme (20) occultent la zone partielle de l'image,
b) les segments chauffés (34) forment une zone chauffée (46) et la zone devant être chauffée (46) est sélectionnée sur la base de la position de l'objet de diaphragme (50) dans l'image,
c) la zone devant être chauffée (46) est déplacée au-dessus de l'image du fait d'un mouvement de l'objet de diaphragme (50), et
d) le diaphragme (20) est préalablement chauffé dans une zone de plus grande dimension que la zone partielle avant que la transparence des segments (34) sélectionnés soit réduite du fait de la poursuite du chauffage, afin de générer une réduction progressive de la transparence autour de la zone devant être chauffée (46) .

2. Procédé selon la revendication 1,
dans lequel les segments sélectionnés (34) sont chauffés par application d'énergie électrique.

3. Procédé selon la revendication 1 ou 2,
dans lequel les segments sélectionnés (34) sont chauffés par application d'un rayonnement optique.

4. Procédé selon l'une quelconque des revendications précédentes,
dans lequel la zone chauffée (46) est modifiée sur la base de connaissances concernant les propriétés d'un objet de diaphragme (50).

5. Procédé selon l'une quelconque des revendications précédentes,
dans lequel le préchauffage est commandé en fonction d'une propriété d'un objet de diaphragme (50).

6. Procédé selon l'une quelconque des revendications précédentes,
dans lequel une propriété d'une zone d'occultation périphérique (54) est sélectionnée et est commandée au moyen dudit préchauffage.

7. Procédé selon l'une quelconque des revendications précédentes,
dans lequel le dispositif détecteur (6) comprend des premier et second détecteurs (8, 10), le chemin de faisceau (32) allant vers le premier détecteur (8) est entièrement interrompu, les segments associés à la zone partielle devant être occultée sont sélectionnés à l'aide du second détecteur (10), les segments sélectionnés (34) sont chauffés et le chemin de faisceau (32) allant vers le premier détecteur (8) est de nouveau ouvert.

8. Dispositif de formation d'image d'un environnement (4) sur un détecteur (8) d'un dispositif détecteur (6) comportant un système optique (22) destiné à générer un chemin de faisceau de formation d'image (32) et un diaphragme (20) disposé sur le chemin de faisceau de formation d'image (32) afin d'occulter une zone partielle d'une image de l'environnement (4) dans lequel se trouve un objet de diaphragme (52), sur le détecteur (8), dans lequel
a) le diaphragme (20) est subdivisé en une pluralité de segments (34) pouvant être commandés individuellement et chaque segment (34) comprend un élément chauffant, et
b) il est prévu un moyen de commande (16) qui est préconfiguré
- pour sélectionner des segments (34) associés à la zone partielle et pour commander des éléments chauffants (38) de manière à chauffer les segments sélectionnés (34), dans lequel la transmission des segments sélectionnés (34) du diaphragme (20) est réduite par chauffage dans l'ensemble de la plage de fréquences dans laquelle le détecteur (8) est sensible et les segments sélectionnés (34) occultent la zone partielle de l'image,
- pour sélectionner la zone (46) chauffée formée par les segments sélectionnés (34) sur la base de la position de l'objet de diaphragme (50) dans l'image,
- pour déplacer la zone devant être chauffée (46) avec un mouvement de l'objet de diaphragme (50) au-dessus de l'image par une commande correspondante des éléments chauffants (38), et
- préchauffer le diaphragme (20) dans une zone de plus grande dimension que la zone partielle par une commande correspondante des éléments chauffants (38) avant que la transparence des segments (34) sélectionnés soit réduite du fait de la poursuite du chauffage.

9. Dispositif selon la revendication 8,
dans lequel le diaphragme (20) peut être déplacé parallèlement à l'axe optique (60) du système optique (22) .
